# EUROPEAN PATENT SPECIFICATION

(11) **EP 2 072 333 B1**
(45) Date of publication and mention of the grant of the patent: **04.06.2014**
(21) Application number: 07123486.8
(22) Date of filing: 18.12.2007
(51) Int. Cl.: B60Q 1/44

(54) **Method and device for controlling the signalling of the intervention of the electric parking brake of a vehicle**
Verfahren und Vorrichtung zur Steuerung der Signalisierung des Eingriffs der elektrischen Parkbremse eines Fahrzeugs
Procédé et dispositif pour le contrôle de la signalisation de l'intervention du frein à main électrique d'un véhicule

(43) Date of publication of application: 24.06.2009
(73) Proprietor: IVECO S.p.A., 10156 Torino (IT)
(72) Inventor: Fisanotti, Giovanni, 10014 Caluso (IT)
(74) Representative: Borsano, Corrado

(56) References cited:
- DE-U1-202006 016 092
- GB-A- 2 180 417
- US-A- 5 090 514
- US-A- 5 642 094
- US-A- 5 775 456

## Description

This invention refers to a method and device for controlling the signalling of the intervention of the electric parking brake of a vehicle.

Some vehicles are equipped with an electric parking brake, that usually consists of an electric motor that may pull or release the brake cable (replacing the manual activation by means of a lever) which activates the brakes.

Usually it is activated by means of an electric control, for example by pressing a button on the dashboard, or by an automatic control in certain operating conditions of the vehicle.

The electric parking brake traditionally has two types of functioning:
- a first type of static functioning, in which the brake is activated when the vehicle is stationary, in order to guarantee that the vehicle keeps still;
- a second type of dynamic functioning, in which the brake is used as an emergency brake when the vehicle is in motion, for example in case of failure of the service brake.

The functioning of the parking brake may be controlled electronically, in order to check the conditions which determine its intervention and the way it intervenes.

In the dynamic functioning, it is known that the electronic control determines the intervention of the electric parking brake in case of failure of the service brake, with the function to replace or to help it.

It is known that the intervention of the electric parking brake may be controlled by means of devices traditionally present on the vehicle, such as ABS or ESP, in order to avoid or to minimize the skid of the wheels on which the brake is operating.

It is also known that, in this case of vehicle in motion, the intervention of the parking brake is signalled by means of the activation of the rear stop/brake-lights.

The patent US5642094 discloses different ways to combine the rear lights of a vehicle in several circumstances.

This type of automatic signalling, however, is not sufficient in order to guarantee the safety for the adjacent vehicles, especially those following. GB 2180417 discloses a method and a device for controlling the signalling of the intervention of the electric packing brake of the vehicle.

Therefore, the aim of this invention is to overcome the drawbacks mentioned above and to provide a method and device for controlling the signalling of the intervention of the electric parking brake of a vehicle, in condition of dynamic functioning, which guarantees the safety for the adjacent vehicles, in particular for those following.

According to the invention, the intervention of the electric parking brake of a vehicle, in condition of dynamic functioning, is signalled by means of the activation of the flashing emergency lights, in order to warn in the best possible way the following vehicles about the condition of a sudden emergency brake.

This invention refers in particular to a method and device for controlling the intervention of the electric parking brake of a vehicle, as described more fully in the claims, which are an integral part of this description.

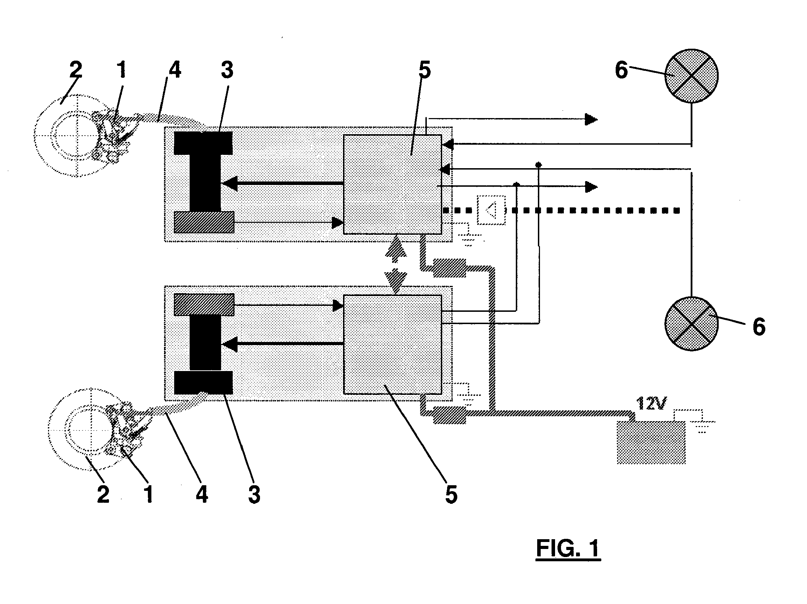

The purposes and advantages of this invention will be clear from the detailed description that follows of an example of embodiment thereof (and of its variants) and from the drawings provided for example purposes only and not to be considered restrictive, in which the figure 1 illustrate an embodiment scheme of the device to which this invention refers.

According to the main aspect of this invention, the intervention of the electric parking brake of a vehicle, in condition of dynamic functioning, is signalled by means of the activation of the flashing emergency lights, that are present of the vehicle.

The activation of the flashing emergency lights is preferably added to the traditional activation of the stop/brake-lights.

As regards the device, with reference to figure 1, the parking brake 1 operates on a pair of wheels 2, and is activated by means of a single electric motor, or of one electric motor 3 per wheel, which pulls or releases its respective brake cable 4.

Each electric motor is controlled by an electronic control unit 5 which collects the signals of the various sensors of the vehicle. For example, one of these signals comes from the control of the pressure level in the hydraulic circuit of the service brakes.

In any case, if the control unit determines the intervention of the electric parking brake in condition of dynamic functioning, then it also determines the activation of the flashing emergency lights 6, which is preferably added to the activation of the stop/brake-lights.

The electronic vehicle control unit is programmed in a way known in the prior art, for example using the usual programming language for vehicle control units, but an additional part of the program carries out the method according to the invention. Therefore the method according to this invention can be applied advantageously by means of a computer program, which comprises program code means performing one or more steps of said method, when said program is run on a computer. For this reason the scope of the present invention is meant to cover also said computer program and the computer-readable medium that comprises a recorded message, such computer-readable medium comprising the program code means for performing one or more steps of such method, when such program is run on a computer.

It will be apparent to the person skilled in the art that other alternative and equivalent embodiments of the invention can be conceived and reduced to practice without departing from the scope of the invention as defined in appended claims.

From the description set forth above it will be possible for the person skilled in the art to embody the invention with no need of describing further construction details.

## Claims

1. Device for controlling the signalling of the intervention of the electric parking brake of a vehicle **characterized in that** said device comprises an electronic control unit (5) and wherein if said control unit (5) determines the intervention of the electric parking brake (1) in condition of dynamic functioning, then the intervention is signalled by means of the activation of the fleshing emergency lights (6) of the vehicle in order to warn the following vehicles.

2. Device according to claim 1, wherein said control unit (5) determines the activation of the stop/brake-lights at the same time of said activation of said flashing emergency lights.

3. Method for controlling the signalling of the intervention of the electric parking brake of a vehicle, **characterized in that** it comprises
- a step of determining the intervention of said electric parking brake (1) in condition of dynamic functioning,
- a step of signalling the intervention of the electric parking brake (1) by means of the activation of the flashing emergency lights (6) of the vehicle in order to warn the following vehicles.

4. Method according to claim 3, **characterized in that** it further comprises the activation of the stop/brake-lights.

5. Computer program comprising program code means adopted to perform the steps of claims 3 or 4, when such program is run on a computer.

6. Computer-readable means comprising a recorded program, said computer-readable means comprising program code means adopted to perform the steps according to claims 3 or 4, when said program is run on a computer.

## Patentansprüche

1. Vorrichtung zum Steuern der Signalgebung des Eingreifens der elektrischen Feststell-Bremse eines Fahrzeugs, **dadurch gekennzeichnet, dass** die Vorrichtung eine elektronische Steuerungs-Einheit (5) umfasst und wobei dann, wenn die Steuerungs-Einheit (5) das Eingreifen der elektrischen Feststell-Bremse (1) in einem Zustand der dynamischen Funktion feststellt, das Eingreifen signalmäßig angezeigt wird mittels des Aktivierens der blinkenden Warnblinkanlagen-Lichter (6) des Fahrzeugs, um die nachfolgenden Fahrzeuge zu warnen.

2. Vorrichtung nach Anspruch 1, wobei die Steuerungs-Einheit (5) das Aktivieren der Stop-/Brems-Lichter zum selben Zeitpunkt wie dem des Aktivierens der blinkenden Warnblinkanlagen-Lichter bestimmt.

3. Verfahren zum Steuern der Signalgebung des Eingreifens der elektrischen Feststell-Bremse eines Fahrzeugs, **dadurch gekennzeichnet, dass** es umfasst:
- einen Schritt des Bestimmens des Eingreifens der elektrischen Feststell-Bremse (1) im Zustand der dynamischen Funktion;
- einen Schritt der Signalgebung des Eingreifens der elektrischen Feststell-Bremse (1) mittels des Aktivierens der blinkenden Warnblinkanlagen-Lichter (6) des Fahrzeugs, um die nachfolgenden Fahrzeuge zu warnen.

4. Verfahren nach Anspruch 3, **dadurch gekennzeichnet, dass** es weiter das Aktivieren der Stop-/Brems-Lichter umfasst.

5. Computer-Programm, umfassend eine Programm-Kodierungs-Einrichtung, die dafür eingesetzt ist, die Schritte der Ansprüche 3 und 4 durchzuführen, wenn man ein solches Programm auf einem Computer laufen lässt.

6. Von einem Computer lesbare Mittel, umfassend ein aufgezeichnetes Programm, wobei die von einem Computer lesbaren Mittel eine Programm-Kodierungs-Einrichtung umfassen, die dafür eingesetzt ist, die Schritte der Ansprüche 3 und 4 durchzuführen, wenn man das Programm auf einem Computer laufen lässt.

## Revendications

1. Dispositif de commande de la signalisation de l'intervention d'un frein de stationnement électrique d'un véhicule, **caractérisé en ce que** ledit dispositif comprend une unité de commande électronique (5), et dans lequel, si ladite unité de commande (5) détermine l'invention du frein de stationnement électrique (1) en condition de fonctionnement dynamique, alors l'intervention est signalée au moyen de l'activation de lumières d'éclairage d'urgence clignotantes (6) du véhicule pour avertir les véhicules qui suivent.

2. Dispositif selon la revendication 1, dans lequel ladite unité de commande (5) détermine l'activation des lumières d'arrêt/frein au même moment que ladite activation desdites lumières d'éclairage d'urgence clignotantes.

3. Procédé de commande de la signalisation de l'intervention du frein de stationnement électrique d'un véhicule, **caractérisé en ce qu'**il comprend
- une étape consistant à déterminer l'intervention dudit frein de stationnement électrique (1) dans l'état du fonctionnement dynamique,
- une étape de signalisation de l'intervention du frein de stationnement électrique (1) au moyen de l'activation des lumières d'éclairage d'urgence clignotantes (6) du véhicule pour avertir les véhicules qui suivent.

4. Procédé selon la revendication 3, **caractérisé en ce qu'**il comprend en outre l'activation des lumières d'arrêt/frein.

5. Programme d'ordinateur comprenant un moyen de code programme apte à exécuter les étapes des revendications 3 ou 4, lorsqu'un tel programme est exécuté sur un ordinateur.

6. Support de stockage lisible par ordinateur comprenant un programme enregistré, ledit support de stockage lisible par ordinateur comprenant un support de code programme apte à exécuter les étapes selon les revendications 3 ou 4, lorsque ledit programme est exécuté sur un ordinateur.
